# EUROPEAN PATENT SPECIFICATION

(11) **EP 3 346 568 B1**
(45) Date of publication and mention of the grant of the patent: **24.06.2020**
(21) Application number: 17150425.1
(22) Date of filing: 05.01.2017
(51) Int. Cl.: H02J 3/06, H02J 3/36

(54) **LOCAL POWER NETWORK ARRANGEMENT**
LOKALE STROMNETZWERKANORDNUNG
AGENCEMENT DE RÉSEAU ÉLECTRIQUE LOCAL

(43) Date of publication of application: 11.07.2018
(73) Proprietor: Ferroamp Elektronik AB, 163 53 Spånga (SE)
(72) Inventor: Karlström, Mats, SE-184 70 Åkersbersga (SE); Jernström, Björn, 175 68 Järfälla (SE)
(74) Representative: Ebbinghaus, Johan Olof

(56) References cited:
- US-A1- 2008 174 177
- US-B1- 8 447 435
- Md Shamiur Rahman ET AL: "Utilization of parked EV-ESS for power management in a grid-tied hybrid AC/DC microgrid", 2015 Australasian Universities Power Engineering Conference (AUPEC), 1 September 2015 (2015-09-01), pages 1-6, XP055643708, DOI: 10.1109/AUPEC.2015.7324812

## Description

### Field of the invention

The invention concerns a local power network arrangement.

### Background art

### Introduction

The topology of the traditional electrical power distribution chain is currently being redefined due to several factors. In the last years, cars that can be fully or partly propelled by electricity have emerged on the market. These cars must be charged before they can be used, and a convenient place to do that is in the home of the owner during the night or at a workplace during the day. However, sometimes such cars have a significant battery capacity and thus need to be able to charge with a rather high power in order to be fully charged for the next time it will be used. Thus, home owners, commercial facilities and electricity providers have found themselves in need of upgrading the power rating of their electricity infrastructure, for instance the power lines and fuses. This leads to an increased cost for all parties; a cost that for the home owner often is recurring since it is reflected in a higher electricity subscription rate and capacity fees. The increase in capacity fees is due to that the overall increased demand for electrical energy entails a need for the electricity companies to increase their peak power delivery capacity, meaning that they must reinforce distribution networks and build new power plants or otherwise increase their capacity in this regard.

Another factor that is conducive to the reorganisation of the electrical power distribution chain is the emergence of low cost photovoltaics or solar cells. In many cases, solar cells can be installed at a home, office or factory building to provide electricity that is cheaper than the electricity that is available locally through the local electricity distribution network. However, the available electricity from the solar cells may at times exceed the instant local need. Therefore, in order to accommodate surplus photovoltaics energy production, new equipment must be installed to allow for the delivery of such surplus energy to the distribution network instead. Thus, suddenly the electricity delivery chain is turned upside down with electricity sources emerging in the end nodes of the delivery chain where there until recently only were consumers of electricity.

Also, for the owner of the solar cells, sending out the produced electricity to the common electricity network may not always be beneficial. Due to local circumstances there may be no or very little pay for the electricity that is put out on the common distribution network. Further, there may be network fees for delivering electric energy to the distribution network. Other drawbacks, such as tax consequences for selling the electricity, which may also involve substantial paperwork, is also possible.

### Problems with prior art solutions

A problem with the previously described scenario with new producers and consumers of electrical energy connected to the electricity delivery network described above, is that it was not designed to handle power sources nor high power consumers in the end nodes of the power distribution chain.

In order to address this problem, often new hardware is installed. For instance, new power lines and new mains fuses to accommodate a higher load, new metering hardware to be able to deliver electricity from a local Alternating Current -AC- voltage network to a distribution network to which it is connected.

These are solutions that may be hard to get around but nevertheless they impose new costs.

In US 2011/0121648 A1 a power supply system is proposed that is intended to make better use of locally produced electricity by implementing a separate Direct Current -DC- voltage network. This solution may lower the need for upgrading local AC power lines and fuses since some of the electricity consumption is taking place in a separate DC-network. However, it can be a costly proposition to implement especially since most household appliances are designed for AC networks and not DC networks.

There have also emerged solutions on the market that use local batteries to increase the self consumption of solar electricity and to reduce the peak load from the power network during for example electrical vehicle (EV) charging. In this way, the problem of consuming high power levels from the distribution network (as well as feeding high power levels into the distribution network) can be mitigated. However, batteries comes with a significant cost that reduce the possible applications where energy storage can be applied.

Md Shamiur Rahman ET AL: "Utilization of parked EV-ESS for power management in a grid-tied hybrid AC/ DC microgrid", 2015 Australasian Universities Power Engineering Conference (AUPEC), 1 September 2015 (2015-09-01), pages 1-6, discloses a power network arrangement in which different DC links connected to respective AC networks are linked via DC/DC converters.

### Summary of the Invention

### Technical problem

It is an object of the present invention to propose a solution for or a reduction of the problems of prior art. A main object is consequently to propose an improved electrical local power network arrangement that can contribute to a more robust electricity delivery chain, while at the same time being economical and provide increased flexibility for the users of electricity, and also, to reduce the problems of feeding high power levels into the distribution network as well as consuming high power levels from the distribution network without the need for local energy storage.

### Solution to Problem

According to the invention, this is accomplished by a local power network arrangement according to claim 1.

This power network arrangement mitigates the above problems by providing a local Direct Current -DC-link network between at least two bidirectional electrical inverters, each such inverter connected to a separate local AC network, wherein the local AC networks in turn are connected via at least a main fuse and an electricity meter to a distribution network.

Thus, in this way, the at least two separate local AC voltage networks are able to share local electrical resources between each other without needing any upgrades in view of their connections to the distribution network or the need for a local energy storage.

Without any upgrade of the fuses or the power lines for the connection between the local AC networks and the distribution network, each local network can achieve a higher power availability by using power also from the DC-link in addition to the power from the distribution network. (Of course, at any time instance it implies that at least one participant on the DC-link is available to deliver energy to the DC-link for enabling other participants on that DC-link to receive energy from the DC-link.) From the users perspective this has the benefit of increased power availability without having to negotiate with the electricity company or having to pay any capacity fees. From the electricity company's point of view there is a smoothing of power use over the participants in the DC-link. This smoothing leading to a lowering of the top load to any particular DC-link participant, thereby minimising the burden on the distribution network.

The dependent claims disclose further advantageous aspects of the invention.

### Brief Description of Drawings

Embodiments exemplifying the invention will now be described, by means of the appended drawings, on which:
Fig. 1 illustrates a local power network arrangement according to the invention,
Fig. 2 illustrates an example of control in the local power network arrangement according to the invention,
Fig. 3 illustrates the use of a DC voltage to signal an availability of electric power on the DC-link network according to the invention, and
Fig. 4 illustrates another use of a DC voltage according to the invention.

### Detailed description

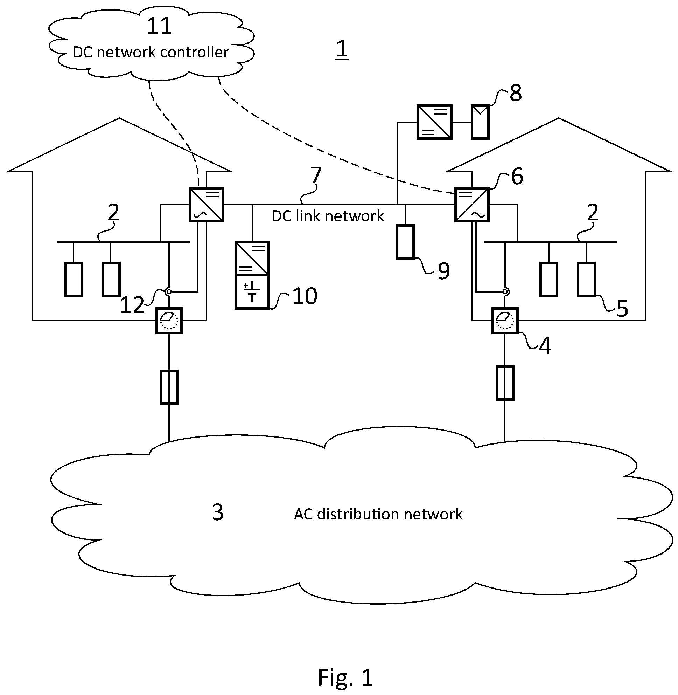

Fig. 1 illustrates an embodiment of the invention. It is a local power network arrangement 1 comprising at least two separate local Alternating Current -AC- voltage networks 2, each connected to an electricity distribution network 3 via at least one mains fuse and an electricity meter 4. The at least two separate local AC networks 2 comprise at least one AC electrical energy consumer 5. The local AC networks 2 are typically any end user of electricity, such as a home user, an office or an industry. Such local AC networks 2 are connected to a distribution network 3 operated by an electricity network company, a distribution system operator (DSO). We can define such an end user as a low voltage user, i.e. they typically use electricity with a relatively low voltage such as, for example, 230/400V in central Europe and 120V/240V in the US. Likewise, then, a local power network arrangement within the meaning of the present application can be defined to be a power network arrangement with two or more local AC voltage networks, as defined above, that are confined to an area comprising a group of houses/buildings/premises. Said area in practice having a circumference of maybe at most a few kilometres.

The arrangement further comprises a bidirectional electrical inverter 6 for each local AC network 2, co-located with and connected to its local AC network 2. The bidirectional inverters 6 are devices that typically use power electronics to convert electric energy between AC and DC. Since they are, in this case, bidirectional, they can transform electric energy both from AC to DC and *vice versa.*

The arrangement 1 further comprises a local Direct Current -DC- link network 7 connected to each inverter 6, thereby indirectly connecting the local AC networks 2. The local Direct Current -DC- link 11 is typically of relatively low power. Low power in this context means up to about 1MW. For instance, a 100 kW system could use 131 Amperes at 760 Volts. The inverters are arranged such that they are able to coordinate a transfer of energy over the DC-network 7 in a desired direction.

This arrangement of the inverters 6 could take many different forms in order to be able to coordinate a transfer of energy over the DC-network 7 in a desired direction. For example, in a basic configuration, so called droop control can be used to control the flow of energy. The inverters 6 connected to the DC-link network 7 could signal that they have electric energy available by raising their output voltage. If any of the inverters 6 at that moment has a need for electric energy, it can then simply tap that energy from the DC-link network.

As long as an inverter is tapping electric energy from the DC-link 7, a voltage rise due to other inverters' signalling availability of electric energy would be curbed, as long as the amount of electric energy tapped is as much as the amount of electric energy provided. Similarly, an inverter capable of feeding energy to the DC-link 7, would curb a voltage drop, due to other inverters' signalling demand for electrical energy if the amounts of energy evens out. Signalling demand would involve e.g. an inverter trying to lower the voltage on the DC-link by making an attempt to tap electrical power from the DC-link network. In this way, the inverters on the DC-link network could be coordinated to transfer energy over the DC-network in a desired direction.

If no inverter would be tapping electric energy from the DC-link network and at least one would be signalling available energy by increasing the voltage on the DC-link network, that voltage would continue to rise up to the control systems saturation limit. Obviously, increasing the voltage too much could damage any unit connected to the DC-link, therefore it is reasonable to set a maximum voltage (saturation limit) at which any inverter would stop the increase in voltage when signalling a surplus of electric energy. This threshold could for instance be 780 Volts. At this peak voltage, the state of the DC-link network would be that one or more inverters has a surplus of electric energy that can be released but there is no other entity on the DC-link that actually can withdraw the surplus from the DC-link network. At this time, the actual transfer of energy over the DC-link network can be anything between zero and some upper limit on how much the DC-link should handle. The deciding factor for the rise and saturation of the DC-level is that, net, there is a surplus supply of energy that cannot be absorbed by the entities connected to the DC-link.

In the opposite way, a demand for electric energy could be signalled by the inverters lowering the voltage on the DC-link network. In the saturated situation for this case, where one or more inverter would like to withdraw electrical energy from the DC-link but no extra energy is available beyond what is already transferred over the DC-link could be assigned a lower voltage limit below which the inverters would not drop the voltage. This could, as an example, be 740 Volts.

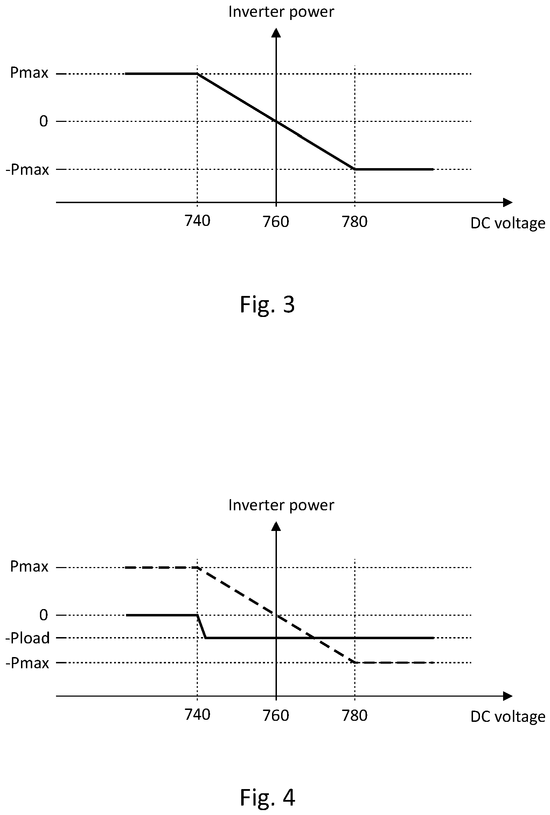

In this exemplary implementation of the handling of the arrangement such that the inverters are able to coordinate a transfer of energy over the DC-network 7 in a desired direction, each inverter could be provided with a droop curve of an exemplary sort as depicted in figure 3. The droop curve essentially states how the inverter should react to a voltage on the DC-link. When the voltage is at nominal 760 V the inverter power is 0. If the DC voltage is increasing, the inverter starts to generate negative power meaning power is drawn from the DC grid and injected on the AC grid, and *vice versa* if the DC voltage is decreasing. If the voltage exceeds normal operating thresholds (740 V and 780 V in figure 3), the inverter saturates at its maximum positive and negative power limits respectively.

If the inverter would need to take electrical energy from the DC-link and transfer it to its local AC voltage network, it could modify it own droop curve such that rather than the one in fig. 3 it could be a curve resembles the one in fig. 4. Fig. 4 depict a possible droop curve for an inverter that would like to tap Pload power from the DC-link network. It taps Pload irrespective of the voltage, but it backs away softly if the voltage is falling towards 740 V.

This is only an example of droop curves to control inverters and DC/DC converters. The inverters and DC/DC converters can also have other, different droop curves with different slopes, offsets, saturation limits, dead bands *et c.* to control the operation of the DC grid. Also, completely other schemas are also possible, such as direct control of the inverters via a (high bandwidth) communications link to some sort of master controller in that case.

The arrangement 1 in fig. 1 illustrates two houses with a respective local AC network 2 and inverters 6 connected to the DC-link network 7. It is also possible to have more than two local AC networks connected to the DC-link network 7. For instance three, four or more. The shape of the DC-link network could be star shape or have any other shape where all inverters and any other equipment connected to the DC-link network would be in galvanic connection with the DC-link network. Although galvanic isolation can be employed within the inverters and DC/DC converters to avoid ground loops and circulating currents.

In one variant of the local power network arrangement 1 according to the invention the inverters 6 could be arranged to lower the power transfer from the distribution network 3 to a first AC electrical energy consumer, on a first local AC voltage network, via the mains fuse and the electricity meter of that first local AC voltage network. It could do so by transferring electrical energy over the DC link network 7 to the inverter connected to the first local AC voltage network and wherein the electrical energy diverted to said inverter comes from at least one other inverter on the DC link network 7.

In this way, each house can have lower ratings on their power mains fuses, but can collectively help each other to even out power demand peaks in each local AC voltage network by providing electrical energy over the local link DC network.

A very simplified implementation of this embodiment could for instance comprise one inverter being set to constantly draw power from the DC-link and provide it to the local AC voltage network. Further, another could at the same time be set to constantly provide power to the DC-link network to a corresponding degree. This set-up could for instance be applicable in a scenario where there is a known, constant electricity consumer on the local AC voltage network, such as a fan *et c.*

Thus, in this way the power transfer from the distribution network 3 to the first AC electrical energy consumer would be lower compared to if the electric energy would be taken solely from the distribution network via the mains fuse(s) and the meter.

According to one embodiment of the local power network arrangement according to the invention there could be at least one DC power source 8, other than the inverters, connected to the DC link network 7 and wherein at least one inverter 6 could be arranged to consume DC power produced by the at least one DC power source 8. An example is shown in fig. 1. In fig.1, the connection of the DC power source 8 to the DC-link network is interleaved, as an example, by a DC/DC converter.

Such a DC power source 8 could for instance be solar cells or wind turbines that produce electricity. With the added power source, the arrangement according to the invention is leveraged to provide a further advantage beyond the already mentioned ones of sharing connections to a distribution network. For instance, if there is a need or will to add solar power to one or more of the local AC-networks, there may be obstacles in the form of unsuitable solar exposure at the site of the local AC-network(s) where solar power should be added. With the addition of the DC-link network, solar panels could be placed where sun exposure is better and the resulting power could be provided to a local AC-network via the DC-link network. The owners could then be physically located in a bad place for sun exposure, for instance in the shadow of a large tree, and still use solar energy by using a nearby, more favourable location for the solar panels. The same would be true for other electricity producers, e.g. wind or hydroelectric power, that may be more favourable to locate at a certain place, but could then for instance be consumed in a local AC-network located apart from that place.

The control of the electric energy from the at least one power source such that at least one inverter consumes the DC-power from the power source could derive from the previously described control. Thus, the at least one power source could be arranged to provide the electricity at a voltage level that signals to at least one inverter in the arrangement that there is electric energy available for consumption.

According to another variant of the local power network arrangement 1 according to the invention and where there is a power source 8, other than the inverters, connected to the DC-link network 7, the inverters 6 could be arranged to consume power output from the at least one DC power 8 source such that power from the at least one DC power source 8 is divided between at least two inverters.

For instance, photovoltaics power can be divided between inverters, which would lessen the power rating needed for each inverter, making them cheaper. Thus, houses, for instance, can share one photovoltaics installation, that, as mentioned earlier, can be located in a beneficial location. In one realisation of this system, the aforementioned control scheme could be used with the power source signalling with a certain voltage output level that it can provide electric energy and that at least two inverters would construe that voltage level as electric energy being available and start to draw power from the DC-link network.

According to a further variant of the local power network arrangement 1 as previously described with a DC power source 8 other than the inverters 6, the inverters could be arranged to at least lower any power transfer from the at least one DC power source 8 on the local DC link network 7 to the distribution network 3 by diverting at least some electricity available from the DC power source 8 to any consumer on the DC-link network 7 or any consumer on any of the local AC voltage networks 2 via a respective inverter.

A simplistic implementation of this scheme could for instance involve the inverters 6 monitoring the DC-link network 7 and, if there is power available from the power source 8 on the DC-link network 7, tap the DC-link network 7 for DC electric energy and provide that energy to a local AC-network 2 where there is a known constant need for electricity. Further, diverting some electricity to a DC load consumer directly connected to the DC-link network 7 could involve the consumer being arranged to simply tap electric energy from the DC-link network when the DC-link network is at a certain voltage level. Many other implementations are of course possible.

In this way, solar power produced at one house can be consumed somewhere among the other houses connected to the local DC link network such that consumption derived from the AC distribution network is at least lowered, for instance in case the price of electricity delivered from the AC distribution network is higher than the price of electricity delivered to the AC distribution network.

When using solar cells it is of particular importance to increase self consumption of the produced electricity, that is the ratio of consumed PV power to produced PV power. This is of interest, since the compensation for exporting energy to the network often is lower than the price for buying energy from the network. Further, there may be limitations on a local AC network connection on the power that may be exported. By transferring PV energy to multiple local AC networks (buildings) this allows more of the produced PV energy to be consumed locally rather than exported to the AC distribution network. Further, the same concept can be used to allow a larger PV installation than otherwise would be motivated considering the consumption in the local AC network.

According to a further local power network arrangement 1 according to the invention and where there is a DC power source 8 connected to the DC-link network 7, the inverters 6 could be arranged to divert excess electricity production from the at least one DC power source 8 on the local DC link network 7 to at least one specific local AC network. Via the at least one specific local AC network, the electric energy could then be transferred to the distribution network via the electricity meter of that at least one local AC network.

Thus, a surplus production from e.g. solar panels can in this way be sent to the distribution network via a local AC network that is especially suitable for sending electricity to the distribution network. For instance by having suitable equipment enabling such energy transfer, such as bidirectional electric meters and possibly also a subscription from the distribution network allowing such transfers. Thus, fewer such equipment is needed with this solution, which would lower the cost of the overall arrangement.

As mentioned before, this could be implemented in many ways. Referring to the previously described solution with a voltage level signalling availability of electricity in the DC-link network, the inverters could be arranged such that the one(s) that is(are) connected to a local AC network and has(have) the capability to deliver electric energy to the distribution AC network would monitor the DC-link network and its local AC network. When there is a surplus of electric energy available on the DC-link network, for instance when the DC-link is saturated at 780 V, the inverter could tap the DC-link network for more electric energy to send it to the AC distribution network via the metering unit.

In a variant of the local power network arrangement 1 according to any of the previous embodiments of the invention, there is at least one DC power consumer 9, other than the inverters, connected to the DC link network 7. Further, the inverters 6 are arranged to provide power to the at least one DC power consumer 9 such that power provided to the at least one DC power consumer 9 comes from at least two inverters. An example of this is shown in fig. 1.

In this way, e.g. an electric car attached to the DC-link network to charge can derive power from multiple inverters. Thus the power output can be divided among the inverters, lessening the power rating requirement of each and therefore making them less expensive. This could be implemented with the previously described schema of using the voltage level as an indicator of available electric energy on the DC-link network. For instance, the at least one DC power consumer could be programmed to simply tap electric energy from the DC-link network and the at least two inverters could be programmed to provide electric power to the DC-link network simultaneously by for instance implementing the same droop curve..

A further variant of the local power network arrangement 1 according to the invention comprises at least one energy storage unit 10 connected to the DC link network 7. In this case, the inverters 6 and the at least one energy storage unit 10 could be arranged such that they are able to coordinate a transfer of energy over the DC-network 7 to or from the energy storage unit 10. The actual transfer of energy could for instance be set up by monitoring a voltage level on the DC-link 7 to control the transfer. For instance, if the voltage is at the upper saturation threshold level (say 780 V), the storage unit 10, for instance an electric battery, could tap the DC-link 7 for electric energy and store it in the battery if the battery is not full. Likewise, if the voltage level on the DC-link 7 is at the lower saturation level (say 740 V), the storage unit 8, for instance a battery, could put out electric energy on the DC-link 7 if it is charged to at least some degree. In fig. 1, a storage unit 10 connected to the DC-link network via a DC-DC converter is shown. The DC-DC converter is shown as an example for a case where the storage unit would require an adaptation of the voltage level to the voltage level of the DC-link network.

An advantage with this arrangement is that an energy storage unit connected to the DC-link can be shared among several local AC networks 2 connected to the DC-link network 7 such that the cost for such an energy storage unit can be decreased for each local network 2 that participates in the use of the unit. The decrease in cost for each participating local network 2 arises both by being able to own a part of a full unit rather than a full unit and by lowering the installation cost of the unit.

There is only one installation necessary for the storage unit shared by the networks compared to if the local networks each would have had a unit of their own installed. Thus, the percentage of the cost for the unit that is attributed to the installation of the unit is lower for this shared solution.

It could be argued that the sharing of a energy storage unit means a corresponding shared ownership and therefore access to the unit implying that the cost per kWh or power delivery capacity available for each participating local network would be the same as if each of the participating local networks would have bought their own storage unit. However, this is not quite true, since in practice the need for the use of the energy storage unit would occur at different times for different local networks. Thus, not all local networks would need the storage unit at the same time. In this way, due to the time shifted need of the storage unit, each participant is getting more performance per cost unit compared to if they would each have bought a storage unit of their own.

Examples of advantages with the storage unit that they get increasingly more of by sharing are: extra available power to for instance charge an electric car without needing to increase a power rating of the fuse(s) connecting them to electricity distribution network. Therefore, they avoid having to pay for such an increased power rating to the electricity company. Likewise they get an increased ability to save electric energy produced by a photovoltaic installation that they own.

### Some comments on the control

For the proposed schema of control of the local network arrangement by using the voltage level on the DC-link network it is conceivable to use different ways to set the reference levels of components connected to the DC-link network. For instance, all inverters, batteries, solar cell strings, *et c.* could be prepared with a set of power thresholds, the reference values that they are operating on dependent on the voltage level on the DC-link. That is, the thresholds and reference values for all inverters and all other components in the system may be predefined. However, it is also conceivable that they may be sent over a communications medium such as Ethernet, radio or Power Line Communication (PLC). Since there is no time critical control functionality tied to the reference values, the requirements on the communications channel are quite relaxed. Thus, the communications channel can be a rather low bandwidth and also relatively high latency.

Using a communications medium would allow a more dynamic coordination of the energy flows on the DC-link network. For instance, in combination with any of the previously described embodiments, a DC-link network controller 11 is possible. Such a DC network controller 11 could be arranged to collect state data from devices connected directly or indirectly to the DC-link network and/or to collect state data from other sources, and to issue control instructions to devices connected to the DC-link network in view of any state data collected in order to coordinate the transfer of energy over the DC-network 7 in a desired direction. This is illustrated in fig. 1 where the DC-link network controller is seen to be in contact with the inverters 6. Other arrangements of the DC-link controller are also possible. The meaning of 'and/or to collect state data from other sources' is that the DC-link controller can collect state data from sources connected directly or indirectly to the DC-link network and also collect state data from other sources or it could collect state data from other sources solely.

The state data may include present local AC-network electric energy consumption, present electric energy production available on the DC-link network, state of charge of an energy storage unit connected to the DC-link network, available power from a connected DC power source and many other parameters. Also, more abstract state data, such as state of health of batteries, grid pricing information, load profile, *et c.* are also possible. Grid pricing information would be an example of state data from other sources, i.e. sources that are not directly or indirectly connected to the DC-link network. It should be noted that in this scheme, and provided that the units that are connected to the DC-link network are configured with a (default) set of reference droop control values, no central control of the system is needed. Thus, in this case, the centrally decided state data is just for the purposes of optimising the operation of the network arrangement. Based on the state data, the DC-link network controller 11 may take a decision on how to coordinate the transfer of electric energy over the DC-network 7 in a desired direction and send the control instructions to devices connected to the DC-link network 7. For a voltage type of control described earlier, such control instructions could comprise upper and lower DC voltage limits as well as parameters describing a relation between a voltage on the DC-link network and the degree of some action that a device receiving the instructions should take.

For instance, a storage device, such as a battery, connected to the DC-link network could receive an upper voltage limit where storage of energy should begin and a lower voltage limit where storage of electric energy should stop. Such a storage unit could also receive parameters, for instance the parameters for a straight line, that describes with how much power the storage should proceed in dependence on the voltage level between the upper or lower voltage limits. The same principle could be used for the case of discharging of the storage device.

The control instructions could be sent to devices connected to the DC-link using a suitable communications medium such as Ethernet, radio or Power Line Communication (PLC), as mentioned before.

The DC-link network controller 11 could be a part of an inverter 6 connected to the DC-link network 7. However, other embodiments are possible. For instance, the DC-link network controller 11 could be a piece of software running on a server. The only need is for the DC-link network controller 11 to be able to communicate with the other devices connected to the DC-link network 7 via a suitable communications channel.

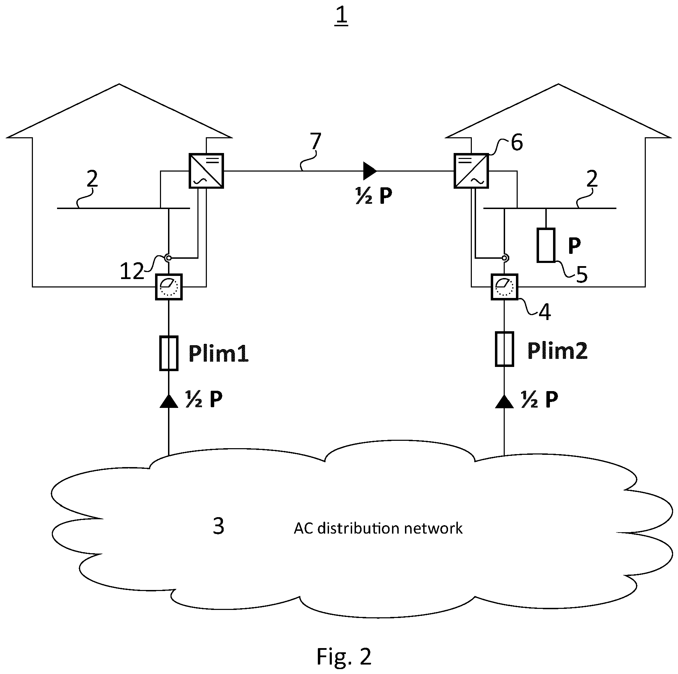

The local power network arrangement 1 according to any of the previously mentioned embodiments may further comprise a current sensor 12 connected to a local AC network 2, see fig. 1 and 2. The current sensor 12 would be connected to the AC network 2 such that it is able to measure an AC current flowing between the AC distribution network 3 and the local AC network 2 and communicate a measurement of that current to an entity in the local power network arrangement 1. Such an entity may be the inverter connected to the same local AC network 2 as the sensor 12, but it may also be another entity in the local power network arrangement 1, such as for instance the previously mentioned DC-link network controller 11.

Available energy and the need for energy can for example be determined by sensing the AC distribution network power by such current sensors 12 and comparing it with thresholds that the network power should stay within. The current sensor 12 can be implemented using current transformers, current shunts, flux gate sensors or a similar device. In fig. 2, it can be seen that an AC electrical energy consumer 5 consuming P Watts of power is fed ½ P from its connection to the AC distribution network 3 via the meter 4. The other half of the P Watts of power is coming from the DC-link network 7. In the case of fig. 2, this ½ P of power is also coming from the AC distribution network, but via another connection/meter/main fuse(s). In this way, the power taken over the connection to the AC distribution network 3 with the meter 4 is lowered and the mains fuse(s) of this connection can therefore also be lowered. In this scenario, the meter 12 can help determine how much power can be drawn from the other connection/meter/main fuse(s) before hitting for instance the maximum rating of the mains fuses. In the example in fig. 2, ½ P is drawn over this other connection, then propagated over the DC-link network 7 and delivered to the consumer P.

As a side note, another possibility, in a baseline case without sensors, is for e.g. an inverter to simply monitor the voltage on the DC-link network and, if DC energy is available there, push that energy to the local AC network. Any load on the local AC network could then use that energy. Should there be no need for electrical energy in the local AC network, then the energy pushed to the local AC network in this scenario would simply find its way to the electricity distribution network instead.

Measurements from the sensor 12 makes it possible for any suitable entity in the local power network arrangement 1 to make a decision based on the energy transfer between said local AC network 2 and the AC distribution network 3. For instance, if consumption of electric energy from the AC distribution network 3 should be minimised and the present consumption is above zero, it could be decided to divert more electric energy from the DC link network 7 to the local AC network 2 in question.

### Reference Signs List

- 1.: Power network arrangement
- 2.: Local AC voltage network
- 3.: AC electricity distribution network
- 4.: Electricity meter
- 5.: Electricity consumer (load)
- 6.: Bidirectional inverter
- 7.: Local DC link network
- 8.: DC power source
- 9.: Power consumer
- 10.: Energy storage unit
- 11.: DC network controller
- 12.: Current sensor

## Claims

1. Local power network arrangement (1) comprising
- at least two separate local Alternating Current -AC- voltage networks (2), each connected to an electricity distribution network (3) via at least one mains fuse and an electricity meter (4), said at least two separate local AC networks (2) comprising at least one AC electrical energy consumer (5),
- a bidirectional AC/DC electrical inverter (6) for each local AC network (2), co-located with and connected to its local AC network (2),
- a local Direct Current -DC- link (7) directly connected to each inverter, thereby indirectly connecting the AC networks (2),
- wherein the inverters (6) are arranged such that they are able to coordinate a transfer of energy over the DC-link (7) in a desired direction.

2. Local power network arrangement (1) according to claim 1, wherein the inverters (6) are arranged to lower power transfer from the distribution network (3) to a first AC electrical energy consumer on a first local AC voltage network via the mains fuse and the electricity meter of that first local AC voltage network by transferring electrical energy over the DC link (7) to the inverter connected to the first local AC voltage network and wherein the electrical energy diverted to said inverter comes from at least one other inverter on the DC link (7).

3. Local power network arrangement (1) according to any of claims 1-2, wherein, there is at least one DC power source (8), other than the inverters, connected to the DC link (7) and wherein at least one inverter is arranged to consume DC power produced by the at least one DC power source (8).

4. Local power network arrangement (1) according to claim 3, wherein the inverters are arranged to consume power output from the at least one DC power source (8) such that power from the at least one DC power source (8) is divided between at least two inverters.

5. Local power network arrangement (1) according to claim 3 or 4, wherein the inverters (6) are arranged to at least lower any power transfer from the at least one DC power source (8) on the local DC link to the distribution network (3) by diverting at least some electricity available from the DC power source (8) to any consumer on the DC-link (7) or any consumer on any of the local AC voltage networks (2) via a respective inverter.

6. Local power network arrangement (1) according to any of claims 3 - 5, wherein the inverters (6) are arranged to divert excess electricity production from the at least one DC power source (8) on the local DC link (7) to at least one specific local AC network to transfer it to the distribution network (3) from that at least one local AC network via the electricity meter of that at least one local AC network.

7. Local power network arrangement (1) according to any of claims 1-6, wherein there is at least one DC power consumer (9), other than the inverters, connected to the DC link (7) and wherein the inverters (6) are arranged to provide power to the at least one DC power consumer (9) such that power provided to the at least one DC power consumer (9) comes from at least two inverters.

8. Local power network arrangement (1) according to any of claims 1-7, wherein there is at least one energy storage unit (10) connected to the DC link (7) and wherein the inverters (6) and the at least one energy storage unit (10) are arranged such that they are able to coordinate a transfer of energy over the DC-link (7) to or from the energy storage unit (10).

9. Local power network arrangement (1) according to any of claims 1-8, comprising a DC network controller (11) arranged to collect state data from devices connected directly or indirectly to the DC-link, and/or to collect state data from other sources, and to issue control instructions to devices connected to the DC-link in view of any state data collected in order to coordinate the transfer of energy over the DC-link (7) in a desired direction.

10. Local power network arrangement (1) according to any of claims 1-9, comprising a current sensor (12) connected to a local AC network (2) such that the current sensor (12) is able to measure an AC current flowing between the AC distribution network (3) and the local AC network (2) and communicate a measurement of the AC current flowing between the AC distribution network (3) and the local AC network (2) to an entity in the local power network arrangement (1).

## Patentansprüche

1. Lokale Stromnetzwerkanordnung (1), die Folgendes umfasst:
- wenigstens zwei separate lokale Wechselstromspannungsnetzwerke (AC-Netzwerke) (2), die jeweils über wenigstens eine Hauptsicherung und einen Stromzähler (4) mit einem Stromverteilungsnetzwerk (3) verbunden sind, wobei die wenigstens zwei separaten lokalen AC-Netzwerke (2) wenigstens einen lokalen Wechselstromverbraucher (AC-Verbraucher) (5) umfassen,
- einen bidirektionalen elektrischen AC/DC-Wechselrichter (6) für jedes lokale AC-Netzwerk (2), der neben seinem lokalen AC-Netzwerk (2) angeordnet und mit diesem verbunden ist,
- eine lokale Gleichstromverbindung (DC-Verbindung) (7), die direkt mit jedem Wechselrichter verbunden ist, wodurch die AC-Netzwerke (2) indirekt verbunden werden,
- wobei die Wechselrichter (6) derart ausgerichtet sind, dass sie die Übertragung von Energie über die DC-Verbindung (7) in einer gewünschten Richtung koordinieren können.

2. Lokale Stromnetzwerkanordnung (1) nach Anspruch 1, wobei die Wechselrichter (6) dazu ausgerichtet sind, die Stromübertragung von dem Verteilungsnetzwerk (3) zu einem ersten Wechselstromverbraucher in einem ersten lokalen Wechselspannungsnetzwerk über die Hauptsicherung und den Stromzähler dieses ersten lokalen Wechselspannungsnetzwerks zu verringern, indem elektrische Energie über die DC-Verbindung (7) an den mit dem ersten lokalen Wechselspannungsnetzwerk verbundenen Wechselrichter übertragen wird, und wobei die zu dem Wechselrichter umgeleitete elektrische Energie von wenigstens einem anderen Wechselrichter auf der DC-Verbindung (7) stammt.

3. Lokale Stromnetzwerkanordnung (1) nach einem der Ansprüche 1 und 2, wobei außer den Wechselrichtern noch wenigstens eine Gleichstromquelle (8) vorhanden ist, die mit der DC-Verbindung (7) verbunden ist, und wobei wenigstens ein Wechselrichter dazu ausgerichtet ist, den von der wenigstens einen Gleichstromquelle (8) erzeugten Strom zu verbrauchen.

4. Lokale Stromnetzwerkanordnung (1) nach Anspruch 3, wobei die Wechselrichter dazu ausgerichtet sind, von der wenigstens einen Gleichstromquelle (8) ausgegebenen Strom so zu verbrauchen, dass von der wenigstens einen Gleichstromquelle (8) ausgegebener Strom zwischen wenigstens zwei Wechselrichtern aufgeteilt wird.

5. Lokale Stromnetzwerkanordnung (1) nach Anspruch 3 oder 4, wobei die Wechselrichter (6) dazu ausgerichtet sind, jegliche Stromübertragung von der wenigstens einen Gleichstromquelle (8) auf der lokalen DC-Verbindung zu dem Verteilungsnetzwerk (3) zumindest zu verringern, indem wenigstens ein Teil der von der Gleichstromquelle (8) verfügbaren Elektrizität über einen jeweiligen Wechselrichter an einen beliebigen Verbraucher auf der DC-Verbindung (7) oder einen beliebigen Verbraucher in einem beliebigen der Wechselspannungsnetzwerke (2) umgeleitet wird.

6. Lokale Stromnetzwerkanordnung (1) nach einem der Ansprüche 3 bis 5, wobei die Wechselrichter (6) dazu ausgerichtet sind, einen Überschuss an von der wenigstens einen Gleichstromquelle (8) auf der lokalen DC-Verbindung (7) erzeugten Elektrizität an wenigstens ein spezifisches lokales AC-Netzwerk umzuleiten, um sie über den Stromzähler des wenigstens einen lokalen AC-Netzwerks von dem wenigstens einen lokalen AC-Netzwerk an das Verteilungsnetzwerk (3) zu übertragen.

7. Lokale Stromnetzwerkanordnung (1) nach einem der Ansprüche 1 bis 6, wobei außer den Wechselrichtern noch wenigstens ein Gleichstromverbraucher (9) vorhanden ist, der mit der DC-Verbindung (7) verbunden ist, und wobei die Wechselrichter (6) dazu ausgerichtet sind, Strom an den wenigstens einen Gleichstromverbraucher (9) so zur Verfügung zu stellen, dass der an den wenigstens einen Gleichstromverbraucher (9) zur Verfügung gestellte Strom von wenigstens zwei Wechselrichtern stammt.

8. Lokale Stromnetzwerkanordnung (1) nach einem der Ansprüche 1 bis 7, wobei wenigstens eine Stromspeichereinheit (10) vorhanden ist, die mit der DC-Verbindung (7) verbunden ist, und wobei die Wechselrichter (6) und die wenigstens eine Stromspeichereinheit (10) derart ausgerichtet sind, dass sie eine Energieübertragung von bzw. zu der Stromspeichereinheit (10) über die DC-Verbindung (7) koordinieren können.

9. Lokale Stromnetzwerkanordnung (1) nach einem der Ansprüche 1 bis 8, die eine DC-Netzwerksteuerung (11) umfasst, die dazu ausgerichtet ist, Statusdaten von den direkt oder indirekt mit der DC-Verbindung verbundenen Geräten zu sammeln, und/oder Statusdaten von anderen Quellen zu sammeln, und dazu, angesichts der gesammelten Statusdaten Steueranweisungen an die mit der DC-Verbindung verbundenen Geräte auszugeben, um die Energieübertragung über die DC-Verbindung (7) in eine gewünschte Richtung zu koordinieren.

10. Lokale Stromnetzwerkanordnung (1) nach einem der Ansprüche 1 bis 9, die einen Stromsensor (12) umfasst, der so mit dem lokalen AC-Netzwerk (2) verbunden ist, dass der Stromsensor (12) einen zwischen dem AC-Verteilungsnetzwerk (3) und dem lokalen AC-Netzwerk (2) fließenden Wechselstrom messen kann und eine Messung des zwischen dem AC-Verteilungsnetzwerk (3) und dem lokalen AC-Netzwerk (2) fließenden Wechselstroms an eine Einrichtung in der lokalen Stromnetzwerkanordnung (1) kommunizieren kann.

## Revendications

1. Agencement de réseau électrique local (1) comprenant :
- au moins deux réseaux de tension CA - CA - locaux (2) séparés, connectés chacun à un réseau de distribution d'électricité (3) par l'intermédiaire d'au moins un fusible de réseau électrique et d'un compteur électrique (4), lesdits au moins deux réseaux à CA locaux (2) séparés comprenant au moins un consommateur d'énergie électrique CA (5),
- un onduleur électrique CA/CC bidirectionnel (6) pour chaque réseau à CA local (2), situé au même emplacement que son réseau à CA local (2) et connecté à celui-ci,
- une liaison de courant continu - CC - locale (7) connectée directement à chaque onduleur, connectant de ce fait indirectement les réseaux à CA (2),
- dans lequel les onduleurs (6) sont agencés de sorte qu'ils soient capables de coordonner un transfert d'énergie sur la liaison CC (7) dans une direction souhaitée.

2. Agencement de réseau électrique local (1) selon la revendication 1, dans lequel les onduleurs (6) sont agencés pour diminuer le transfert de puissance du réseau de distribution (3) à un premier consommateur d'énergie électrique CA sur un premier réseau de tension CA local par l'intermédiaire du fusible de réseau électrique et du compteur électrique de ce premier réseau de tension CA local en transférant l'énergie électrique sur la liaison CC (7) à l'onduleur connecté au premier réseau de tension CA local, et dans lequel l'énergie électrique détournée vers ledit onduleur vient d'au moins un autre onduleur sur la liaison CC (7).

3. Agencement de réseau électrique local (1) selon l'une quelconque des revendications 1 à 2, dans lequel, il y a au moins une source de puissance CC (8), autre que les onduleurs, connectée à la liaison CC (7), et dans lequel au moins un onduleur est agencé pour consommer la puissance CC produite par l'au moins une source de puissance CC (8).

4. Agencement de réseau électrique local (1) selon la revendication 3, dans lequel les onduleurs sont agencés pour consommer la puissance délivrée à partir de l'au moins une source de puissance CC (8) de sorte que la puissance provenant de l'au moins une source de puissance CC (8) soit répartie entre au moins deux onduleurs.

5. Agencement de réseau électrique local (1) selon la revendication 3 ou 4, dans lequel les onduleurs (6) sont agencés pour au moins diminuer tout transfert de puissance de l'au moins une source de puissance CC (8) sur la liaison CC locale au réseau de distribution (3) en détournant au moins une partie de l'électricité disponible de la source de puissance CC (8) vers n'importe quel consommateur sur la liaison CC (7) ou vers n'importe quel consommateur sur l'un quelconque des réseaux de tension CA locaux (2) par l'intermédiaire d'un onduleur respectif.

6. Agencement de réseau électrique local (1) selon l'une quelconque des revendications 3 à 5, dans lequel les onduleurs (6) sont agencés pour détourner la production d'électricité en excès de l'au moins une source de puissance CC (8) sur la liaison CC locale (7) vers au moins un réseau de courant CA local spécifique pour la transférer au réseau de distribution (3) à partir de ce au moins un réseau de courant CA local par l'intermédiaire du compteur électrique de ce au moins un réseau de courant CA local.

7. Agencement de réseau électrique local (1) selon l'une quelconque des revendications 1 à 6, dans lequel il y a au moins un consommateur de puissance CC (9), autre que les onduleurs, connecté à la liaison CC (7), et dans lequel les onduleurs (6) sont agencés pour fournir la puissance à l'au moins un consommateur de puissance CC (9) de sorte que la puissance fournie à l'au moins un consommateur de puissance CC (9) vienne d'au moins deux onduleurs.

8. Agencement de réseau électrique local (1) selon l'une quelconque des revendications 1 à 7, dans lequel il y a au moins une unité de stockage d'énergie (10) connectée à la liaison CC (7), et dans lequel les onduleurs (6) et l'au moins une unité de stockage d'énergie (10) sont agencés de sorte qu'ils soient capables de coordonner un transfert d'énergie sur la liaison CC (7) vers ou à partir de l'unité de stockage d'énergie (10).

9. Agencement de réseau électrique local (1) selon l'une quelconque des revendications 1 à 8, comprenant un contrôleur de réseau à CC (11) agencé pour collecter des données d'état des dispositifs connectés directement ou indirectement à la liaison CC, et/ou pour collecter des données d'état d'autres sources, et pour délivrer des instructions de commande aux dispositifs connectés à la liaison CC au vu des données d'état collectées afin de coordonner le transfert d'énergie sur la liaison CC (7) dans une direction souhaitée.

10. Agencement de réseau électrique local (1) selon l'une quelconque des revendications 1 à 9, comprenant un détecteur de courant (12) connecté à un réseau à CA local (2) de sorte que le détecteur de courant (12) soit capable de mesurer un courant CA circulant entre le réseau de distribution à CA (3) et le réseau à CA local (2) et de communiquer une mesure du courant CA circulant entre le réseau de distribution à CA (3) et le réseau à CA local (2) à une entité dans l'agencement de réseau électrique local (1).
